# EUROPEAN PATENT APPLICATION

(11) **EP 4 391 281 A1**
(43) Date of publication of application: **26.06.2024**
(21) Application number: 22876643.2
(22) Date of filing: 15.07.2022
(51) Int. Cl.: H02J 7/00, H02J 7/04, G01R 19/165

(54) **ELECTRONIC DEVICE WITH INCREASED COMPATIBILITY FOR DIRECT CHARGING**

(30) Priority: 30.09.2021 KR 20210130415; 13.10.2021 KR 20210135745
(71) Applicant: Samsung Electronics Co., Ltd., Suwon-si, Gyeonggi-do 16677 (KR)
(72) Inventor: KIM, Kyoungwon, Suwon-si, Gyeonggi-do 16677 (KR)
(74) Representative: Appleyard Lees IP LLP
(86) International application number: PCT/KR2022/010404
(87) International publication number: WO 2023/054868

(57) **Abstract**

Various embodiments of the present disclosure relate to an electronic device and method, comprising: a first charger comprising a switching regulator; and a second charger comprising a power converter which lowers an input current supplied from an external device by a designated multiplier, and which increases an input voltage supplied from the external device by the designated multiplier, wherein the present disclosure may comprise the steps of: determining, on the basis of detecting that the external device is connected in a wired manner, whether the external device is a first charging device which can control an output voltage and an output current on the basis of the controlling of the electronic device; charging a battery by using the second charger, if the external device is the first charging device; charging the battery by using the second charger, if the external device is a second charging device with a fixed output voltage and output current, and if the battery satisfies a designated initial condition; and deactivating the second charger and charging the battery by using the first charger, if at least one of a plurality of designated first conditions is satisfied while charging the battery through the second charger.

## Description

### [Technical Field]

Various embodiments of the disclosure relate to an electronic device with increased compatibility for direct charging.

### [Background Art]

Power consumption of portable electronic devices tends to increase as technology advances, and accordingly, the capacity of the batteries (or battery cells) mounted on portable electronic devices also tends to increase to higher capacities.

Recently, charging devices supporting a programmable power supply (PPS) function have been mass-produced as charging devices for faster charging of high-capacity batteries mounted in electronic devices. Charging devices supporting the PPS function, unlike other charging devices that do not support the PPS function (e.g., charging devices that provide a fixed output current and a fixed output current), may support a programmable power supply (PPS) function that changes the power value (e.g., current and/or voltage) of the power signal. For example, charging devices supporting the PPS function may vary the output current and output voltage based on control of the electronic device. On the other hand, charging devices that do not support the PPS function may have fixed output current and output voltage.

### [Disclosure of Invention]

### [Technical Problem]

When detecting that a charging device is connected through a universal serial bus (USB) connector, an electronic device may identify whether the connected charging device provides a PPS function.

When the connected charging device provides the PPS function, the electronic device may activate a direct charging circuit (e.g., a direct charging integrated circuit (DCIC)) and charge the battery by using the direct charging circuit. The direct charging circuit may charge the battery at high speed by lowering the voltage value of the power signal received from the charging device by a designated multiplier and increasing the current value of the power signal by a designated multiplier.

When the connected charging device does not provide the PPS function, the electronic device may deactivate a direct charging circuit and charge the battery by using a switching charger circuit. Charging a battery using a switching charger circuit has the disadvantages of lower charging efficiency (e.g., charging speed) and higher heat generation than charging a battery using a direct charging circuit.

Various embodiments of the disclosure may provide an electronic device and method capable of increasing charging efficiency (e.g., charging speed) and reducing heat generation even when the charging device does not support the PPS function by charging the battery by using a direct charging circuit for at least a part of the period of charging the battery.

The technical problems to be achieved in the disclosure are not limited to the above-mentioned technical problems, and other technical problems not mentioned may be clearly understood by those skilled in the art to which the disclosure belongs from the following description.

### [Solution to Problem]

An electronic device according to various embodiments may include a battery, a first charger including a switching regulator, a second charger including a power converter which outputs an input current supplied from an external device by increasing the input current by a designated multiplier, and which outputs an input voltage supplied from the external device by lowering the input voltage by the designated multiplier, and a processor, and the processor may identify the type of the external device based on detecting that the external device is connected in a wired manner, determine whether the external device is a first charging device which may adjust an output voltage and an output current based on the controlling of the processor, charge the battery by using the second charger, if the external device is the first charging device, and identify whether the remaining amount or voltage of the battery is less than a designated value as a designated initial condition of the battery if the external device is not the first charging device but a second charging device with a fixed output voltage and output current, charge the battery by using the first charger if the battery does not satisfy a designated initial condition, charge the battery by using the second charger if the battery satisfies a designated initial condition, monitor whether a plurality of first conditions designated while charging the battery through the second charger satisfy a state in which a current greater than the input current is input from the second charging device, a state in which a battery voltage of the battery is detected to be higher than the designated full charge voltage, or a state in which the input current is less than a preconfigured value, and deactivate the second charger and charge the battery by using the first charger if at least one of the plurality of designated first conditions is satisfied.

In a method of an electronic device according to various embodiments, the electronic device may include a battery, a first charger including a switching regulator, and a second charger including a power converter which lowers an input current supplied from an external device by a designated multiplier, and which increases an input voltage supplied from the external device by the designated multiplier, and the method may include identifying the type of the external device based on detecting that the external device is connected in a wired manner, determining whether the external device is a first charging device which may adjust an output voltage and an output current based on the controlling of the electronic device, charging the battery by using the second charger if the external device is the first charging device, and identifying whether the remaining amount or voltage of the battery is less than a designated value as a designated initial condition of the battery if the external device is not the first charging device but a second charging device with a fixed output voltage and output current, charging the battery by using the first charger, if the battery does not satisfy a designated initial condition, charging the battery by using the second charger if the battery satisfies a designated initial condition, monitoring whether a plurality of first conditions designated while charging the battery through the second charger satisfy a state in which a current greater than the input current is input from the second charging device, a state in which a battery voltage of the battery is detected to be higher than the designated full charge voltage, or a state in which the input current is less than a preconfigured value, and deactivating the second charger and charging the battery by using the first charger if at least one of the plurality of designated first conditions is satisfied.

### [Advantageous Effects of Invention]

Various embodiments of the disclosure may provide an electronic device and method capable of increasing charging efficiency (e.g., charging speed) and reducing heat generation even when the charging device does not support the PPS function by charging the battery by using a direct charging circuit for at least a part of the period of charging the battery.

In addition, various effects that may be directly or indirectly realized through the disclosure may be provided.

### [Brief Description of Drawings]

Other aspects, features, and advantages according to specific embodiments of the disclosure will become more apparent from the accompanying drawings and corresponding description.
FIG. 1 is a block diagram of an electronic device in a network environment according to various embodiments.
FIG. 2 is a block diagram of a power management module and battery according to various embodiments.
FIG. 3 is a schematic block diagram of a wireless charging system according to various embodiments.
FIG. 4 is a flowchart illustrating an operation of charging a battery by an electronic device according to an embodiment.
FIG. 5 is a flowchart illustrating an operation of an electronic device according to an embodiment when a second charging device is connected.
FIG. 6 is a graph comparing a charging profile of an electronic device according to an embodiment and a charging profile according to a comparative example when a second charging device is connected.
FIG. 7 is a graph comparing heat generation of an electronic device according to an embodiment and heat generation of an electronic device according to a comparative example when a second charging device is connected.
FIG. 8 is a flowchart illustrating operations of an electronic device according to an embodiment when a third charging device is connected.
FIG. 9 is a graph illustrating a charging profile of an electronic device according to an embodiment when a third charging device is connected.

### [Mode for the Invention]

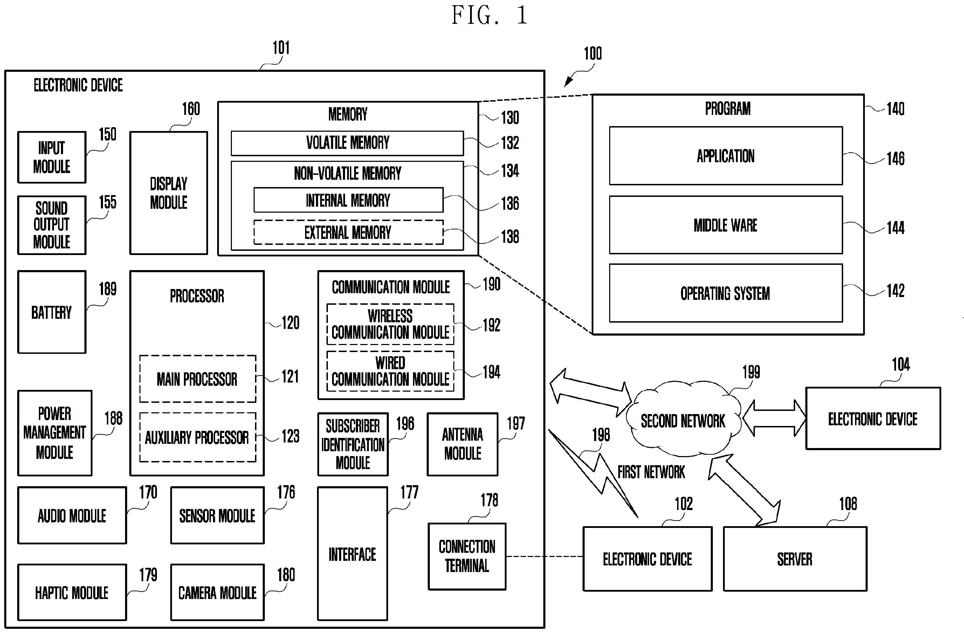

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

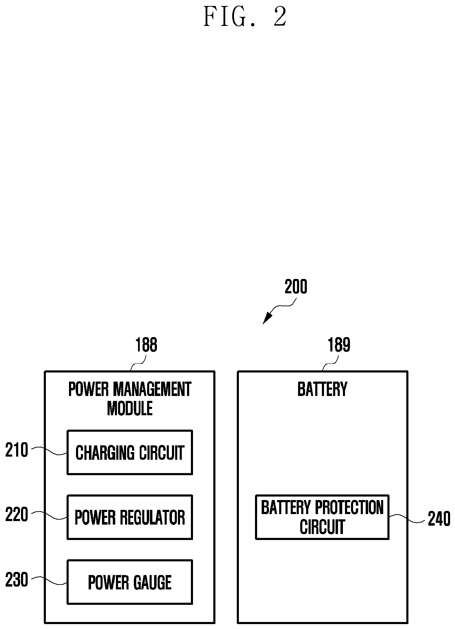

FIG. 2 is a block diagram 200 of a power management module 188 and a battery 189 according to various embodiments. Referring to FIG. 2, the power management module 188 may include a charging circuit 210, a power regulator 220, or a power gauge 230. The charging circuit 210 may charge the battery 189 by using power supplied from an external power source to the electronic device 101. According to an embodiment, the charging circuit 210 may select a charging method (e.g., normal charging or fast charging) based on at least a part of the type of external power (e.g., power adapter, USB or wireless charging), the size of the power available from the external power source (e.g., about 20 watts or more), or the properties of the battery 189, and charge the battery 189 by using the selected charging method. The external power source may be connected to the electronic device 101 by wire, for example, through the connection terminal 178, or wirelessly through the antenna module 197.

The power regulator 220 may generate a plurality of powers having different voltages or different current levels, for example, by adjusting the voltage level or current level of power supplied from an external power source or the battery 189. The power regulator 220 may adjust the power of the external power source or the battery 189 to a voltage or current level suitable for each of some of the components included in the electronic device 101. According to an embodiment, the power regulator 220 may be implemented in the form of a low-dropout (LDO) regulator or a switching regulator. The power gauge 230 may measure usage state information (e.g., the capacity of the battery 189, the number of times of charging and discharging, voltage, or temperature) on the battery 189.

The power management module 188 may use, for example, the charging circuit 210, the power regulator 220, or the power gauge 230 to determine charging state information (e.g., life, overvoltage, undervoltage, overcurrent, overcharge, over discharge, overheat, short circuit, or swelling) related to the charging of the battery 189 based at least in part on the measured usage state information. The power management module 188 may determine whether the battery 189 is normal or abnormal based at least in part on the determined charging state information. When it is determined that the state of the battery 189 is abnormal, the power management module 188 may adjust (e.g., reduce charging current or voltage, or stop charging) charging the battery 189. According to an embodiment, at least some of the functions of the power management module 188 may be performed by an external control device (e.g., the processor 120).

According to an embodiment, the battery 189 may include a battery protection circuit (protection circuit module (PCM)) 240. The battery protection circuit 240 may perform one or more of various functions (e.g., a pre-blocking function) to prevent performance degradation or burnout of the battery 189. The battery protection circuit 240 may additionally or alternatively be configured as at least a part of a battery management system (BMS) capable of performing various functions including cell balancing, battery capacity measurement, number of charge and discharge measurements, temperature measurements, or voltage measurements.

According to an embodiment, at least a part of the usage state information or the charging state information of the battery 189 may be measured by using a corresponding sensor (e.g., a temperature sensor) in the sensor modules 276, the power gauge 230, or the power management module 188. According to an embodiment, the corresponding sensor (e.g., temperature sensor) in the sensor module 176 may be included as part of the battery protection circuit 140 or may be disposed near the battery 189 as a separate device.

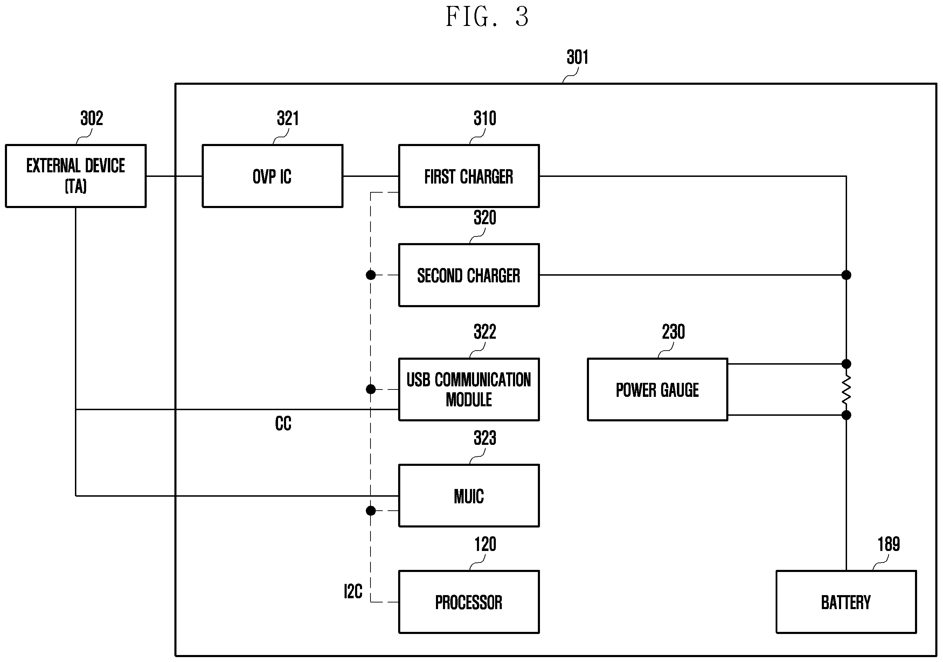

An electronic device (e.g., the electronic device 301 of FIG. 3) according to various embodiments may include a battery (e.g., the battery 189 of FIG. 1), a first charger (e.g., the first charger 310 of FIG. 3) including a switching regulator, a second charger (e.g., the second charger 320 of FIG. 3) including a power converter which outputs an input current supplied from an external device (e.g., the external device 302 of FIG. 3) by increasing the input current by a designated multiplier, and which outputs an input voltage supplied from the external device 302 by lowering the input voltage by the designated multiplier, and a processor (e.g., the processor 120 of FIG. 1), and the processor 120 may identify the type of the external device 302 based on detecting that the external device 302 is connected in a wired manner, determine whether the external device 302 is a first charging device which may adjust an output voltage and an output current based on the controlling of the processor 120, charge the battery 189 by using the second charger 320, if the external device 302 is the first charging device, and identify whether the remaining amount or voltage of the battery 189 is less than a designated value as a designated initial condition of the battery 189 if the external device 302 is not the first charging device but a second charging device with a fixed output voltage and output current, charge the battery 189 by using the first charger 310 if the battery 189 does not satisfy a designated initial condition, charge the battery 189 by using the second charger 320 if the battery 189 satisfies a designated initial condition, monitor whether a plurality of first conditions designated while charging the battery 189 through the second charger 320 satisfy a state in which a current greater than the input current is input from the second charging device, a state in which a battery voltage of the battery 189 is detected to be higher than the designated full charge voltage, or a state in which the input current is less than a preconfigured value, and deactivate the second charger 320 and charge the battery 189 by using the first charger 310 if at least one of the plurality of designated first conditions is satisfied.

According to an embodiment, the state in which the input current is less than a preconfigured value may include a state in which the input current is smaller than the current value lowered by the designated multiplier to the maximum input current capable of being supplied from the first charger 310 to the battery 189.

According to an embodiment, the second charging device may be a charging device that does not support power delivery (PD) communication and provides an output less than a designated reference power.

According to an embodiment, the second charging device may be a charging device that does not support a programmable power supply (PPS) function.

According to an embodiment, if the external device 302 connected to the electronic device 301 is the second charging device and satisfies the designated initial condition, the processor 120 may configure an input current obtained by applying an offset to the maximum output current capable of being provided from the second charging device, receive the maximum output current from the second charging device by requesting the input current to which the offset is applied from the second charging device, and charge the battery 189 by controlling the maximum output current to be input from the second charging device to the second charger 320.

According to an embodiment, if the external device 302 is not the first charging device but a third charging device in which output voltage and output current are fixed, the processor 120 may identify whether the battery 189 satisfies a designated initial condition, charge the battery 189 by using the first charger 310 if the battery 189 does not satisfy a designated initial condition, charge the battery 189 by using the second charger 320 if the battery 189 satisfies a designated initial condition, monitor whether at least one of a plurality of designated second conditions is satisfied while charging the battery 189 through the second charger 320, and deactivate the second charger 320 and charge the battery 189 by using the first charger 310 if at least one of the plurality of designated second conditions is satisfied.

According to an embodiment, the third charging device may be a charging device that supports power delivery (PD) communication and provides an output greater than or equal to a designated reference power.

According to an embodiment, the plurality of designated second conditions may include a state in which a current greater than the input current is input from the third charging device, a state in which a battery voltage of the battery 189 is detected to be higher than a designated full charge voltage in the last step section among a plurality of charging steps for charging the battery 189, or a state in which a constant current (CC) mode where the output current of the third charging device is fixed is switched to a constant voltage (CV) mode where the output voltage of the third charging device is fixed.

According to an embodiment, if the third charging device switches from the CC mode to the CV mode, the processor 120 may shorten the output period of a polling signal for identifying the current input to the second charger 320.

According to an embodiment, if the third charging device switches from the CC mode to the CV mode, the processor 120 may compare a value obtained by applying a designated multiplier to the maximum input current supplied to the battery 189 from the first charger 310 and an input current input from the third charging device, and deactivate the second charger 320 and charge the battery 189 by using the first charger 310 if the input current input from the third charging device is smaller than or equal to the value obtained by applying the designated multiplier to the maximum input current.

In a method of an electronic device 301 according to various embodiments, the electronic device 301 may include a battery 189, a first charger 310 including a switching regulator, and a second charger 320 including a power converter which lowers an input current supplied from an external device 302 by a designated multiplier, and which increases an input voltage supplied from the external device 302 by the designated multiplier, and the method may include identifying the type of the external device 302 based on detecting that the external device 302 is connected in a wired manner, determining whether the external device 302 is a first charging device which may adjust an output voltage and an output current based on the controlling of the electronic device 301, charging the battery 189 by using the second charger 320 if the external device 302 is the first charging device, and identifying whether the remaining amount or voltage of the battery 189 is less than a designated value as a designated initial condition of the battery 189 if the external device 302 is not the first charging device but a second charging device with a fixed output voltage and output current, charging the battery 189 by using the first charger 310, if the battery 189 does not satisfy a designated initial condition, charging the battery 189 by using the second charger 320 if the battery 189 satisfies a designated initial condition, monitoring whether a plurality of first conditions designated while charging the battery 189 through the second charger 320 satisfy a state in which a current greater than the input current is input from the second charging device, a state in which a battery voltage of the battery 189 is detected to be higher than the designated full charge voltage, or a state in which the input current is less than a preconfigured value, and deactivating the second charger 320 and charging the battery 189 by using the first charger 310 if at least one of the plurality of designated first conditions is satisfied.

According to an embodiment, the state in which the input current is less than a preconfigured value may include a state in which the input current is smaller than the current value lowered by the designated multiplier to the maximum input current capable of being supplied from the first charger 310 to the battery 189.

According to an embodiment, the second charging device may be a charging device that does not support power delivery (PD) communication and provides an output less than a designated reference power.

According to an embodiment, the second charging device may be a charging device that does not support a programmable power supply (PPS) function.

According to an embodiment, if the external device 302 connected to the electronic device 301 is the second charging device and satisfies the designated initial condition, configuring an input current obtained by applying an offset to the maximum output current capable of being provided from the second charging device, receiving the maximum output current from the second charging device by requesting the input current to which the offset is applied from the second charging device, and charging the battery 189 by controlling the maximum output current to be input from the second charging device to the second charger 320 may be further included.

According to an embodiment, if the external device 302 is not the first charging device but a third charging device in which output voltage and output current are fixed, identifying whether the battery 189 satisfies a designated initial condition, charging the battery 189 by using the first charger 310 if the battery 189 does not satisfy a designated initial condition, charging the battery 189 by using the second charger 320 if the battery 189 satisfies a designated initial condition, monitoring whether at least one of a plurality of designated second conditions is satisfied while charging the battery 189 through the second charger 320, and deactivating the second charger 320 and charging the battery 189 by using the first charger 310 if at least one of the plurality of designated second conditions is satisfied may be further included.

According to an embodiment, the third charging device may be a charging device that supports power delivery (PD) communication and provides an output greater than or equal to a designated reference power.

According to an embodiment, the plurality of designated second conditions may include a state in which a current greater than the input current is input from the third charging device, a state in which a battery voltage of the battery 189 is detected to be higher than a designated full charge voltage in the last step section among a plurality of charging steps for charging the battery 189, or a state in which a constant current (CC) mode where the output current of the third charging device is fixed is switched to a constant voltage (CV) mode where the output voltage of the third charging device is fixed.

According to an embodiment, if the third charging device switches from the CC mode to the CV mode, shortening the output period of a polling signal for identifying the current input to the second charger 320 may be further included.

According to an embodiment, if the third charging device switches from the CC mode to the CV mode, comparing a value obtained by applying a designated multiplier to the maximum input current supplied to the battery 189 from the first charger 310 and an input current input from the third charging device, and deactivating the second charger 320 and charging the battery 189 by using the first charger 310 if the input current input from the third charging device is smaller than or equal to the value obtained by applying the designated multiplier to the maximum input current may be further included.

FIG. 3 is a schematic block diagram of a wireless charging system according to various embodiments.

The electronic device 301 illustrated in FIG. 3 may include an embodiment that is at least partially similar to or different from the electronic device 101 illustrated in FIG. 1.

Referring to FIG. 3, the wireless charging system according to various embodiments may include the electronic device 301 and/or an external device 302. According to an embodiment, the external device 302 may be a charging device (travel adapter (TA)) connected to the electronic device 301 through a wired connection and supplying designated power to the electronic device 301. In an embodiment, the external device 302 may be an electronic device similar to the electronic device 301 (e.g., the electronic device 102 or the electronic device 104 of FIG. 1).

According to an embodiment, the external device 302 may be a charging device 302 that may adjust the output voltage and output current, for example, a charging device 302 that supports a programmable power supply (PPS) function, or a charging device 302 in which an output voltage and an output current are fixed, for example, the charging device 302 that does not support the PPS function. In the disclosure, as an example of the charging device 302 capable of adjusting an output voltage or an output current, it is described as the charging device 302 supporting the PPS function, but may not be limited to the term PPS. For example, the charging device 302 supporting the PPS function is only an example, and any charging device 302 may be used as long as it may adjust the output voltage or output current.

According to an embodiment, when the external device 302 is a charging device 302 supporting the PPS function, the external device 302 may variously change or adjust the output voltage or output current based on the control of the electronic device 301. For example, when the external device 302 is the charging device 302 supporting the PPS function, the external device 302 may adjust the output voltage in the range of about 3V to about 21V. In the disclosure, the external device 302 supporting the PPS function may be referred to as a "first charging device ".

According to an embodiment, when the external device 302 is a charging device 302 that does not support the PPS function, the external device 302 may supply a fixed output voltage or a fixed output current to the electronic device 301. According to an example, the external device 302 may be the charging device 302 that does not support the PPS function, an adaptive fast charging (AFC) device 302 that is a standard of Samsung Electronics TM, and may provide a fixed output voltage of about 9V. In the disclosure, the external device 302 corresponding to the AFC charging device will be referred to as a "second charging device". According to an embodiment, the second charging device is not limited to the AFC charging device and may be changed in various ways. For example, the second charging device may be the charging device 302 that provides a fixed output voltage and a fixed output current and does not support a PD standard (or PD communication). For example, the second charging device may be the charging device 302 that provides a fixed output voltage and a fixed output current, and provide an output less than a designated reference power. According to an embodiment, the designated reference power may be approximately 20W, and the second charging device may be a charging device 302 that provides less than approximately 20W. For example, the second charging device may be a charging device 302 that provides power of about 15 W, which is less than about 20 W.

According to an embodiment, the external device 302 may be a power delivery (PD) 2.0 standard charging device 302 with a fixed power data object (PDO) (e.g., fixed output voltage or fixed output current), and may provide a fixed output voltage of, for example, about 9V. In the disclosure, the external device 302 corresponding to the PD 2.0 standard charging device 302 will be referred to as a "third charging device." According to an embodiment, the third charging device is not limited to the PD 2.0 standard charging device 302, and may be any charging device 302 as long as it does not support the PPS function and supports the PD standard (or PD communication). According to an embodiment, the third charging device may be a charging device 302 that provides a fixed output voltage and a fixed output current, and provides an output greater than or equal to a designated reference power. According to an embodiment, the designated reference power may be approximately 20W, and the third charging device may be a charging device 302 providing power greater than or equal to approximately 20W. For example, the third charging device may provide an output of either about 20W, or about 27W, about 45W, and/or about 100W, which are greater than about 20W. The third charging device may provide a fixed output voltage of any one of about 5V, about 9V, about 15V, and/or about 20V.

According to an embodiment, the external device 302 may communicate with the electronic device 301 through an MUIC (e.g., a MUX IC) 323 and/or a USB communication module (e.g., a CCPD module) 322 of the electronic device 301. For example, the external device 302 may be connected to the USB communication module (e.g., a CCPD module) 322 of the electronic device 301 through a USB C type CC terminal.

According to an embodiment, the electronic device 301 may include an overvoltage protection device (e.g., over voltage protection IC (OVP) 321, a first charger 310, a second charger 320, the USB communication module 322, the MUIC (e.g., a MUX IC) 323, the processor 120, the battery 189, or the power gauge 230.

According to an embodiment, the first charger 310, the second charger 320, the USB communication module (e.g., a CCPD module) 322, and the processor 120 may be connected to each other through a designated system interface. For example, the designated system interface may include an inter-integrated circuit (I2C), but the disclosure may not be limited thereto.

According to an embodiment, the first charger 310 may include a switching charger (or a switching regulator) including a buck-boost converter (not illustrated) and a charge controller (not illustrated), and charge the battery 189 by adjusting the input voltage input from the external device 302 or the input current input from the external device 302.

According to an embodiment, the second charger 320 may be a direct charger that supports switched cap (capacitor) divider type direct charging (hereinafter, "DC charging"). According to an embodiment, the second charger 320 may include a power converter that lowers the input voltage input from the external device 302 by a designated multiplier and increases the input current input from the external device 302 by a designated multiplier. According to an embodiment, the second charger 320 may include a 2:1 voltage divider that lowers the input voltage to 1/2 and doubles the input current. According to various embodiments, the second charger 320 is not limited to including the 2:1 voltage divider, but may be variously designed to include a 3:1 voltage divider that lowers the input voltage by 1/3, triples the input current, or a 4:1 voltage divider that lowers the input voltage by 1/4, and quadruples the input current.

The USB communication module 322 may be referred to as a "CCPD module", and may perform a type C detection function that identifies a Rp value through the CC terminal of the charging device 302, a PD bi-phase marked code (BMC) communication, or PPS communication. The Rp value may be an identification value for identifying a type of cable of the charging device 302. After performing the PDBMC communication with the external device 302, the electronic device 301 may receive designated power having a voltage boosted from about 5V to about 9V from the external device 302.

According to an embodiment, when the external device 302 is a second charging device (e.g., an AFC charging device), the electronic device 301 may perform data line communication with the external device 302 through the MUIC (e.g., a MUX IC) 323 and identify the type of the charging device 302. According to an embodiment, the electronic device 301 may receive designated power having a voltage of about 9V from the external device 302 after performing data line communication with the external device 302.

According to an embodiment, when the electronic device 301 and the external device 302 are connected by wire, the processor 120 may identify the type of the external device 302. For example, when the electronic device 301 and the external device 302 are connected by wire, the processor 120 may determine whether the external device 302 is the charging device 302 that supports the PPS function.

According to an embodiment, when the external device 302 is the charging device 302 that supports the PPS function (e.g., when the external device 302 is a first charging device), the processor 120 may charge the battery 189 by controlling the second charger 320. According to an embodiment, when the external device 302 is the charging device 302 that supports the PPS function, the processor 120 may dynamically change the current configuration value of the second charger 320 based on the remaining amount (or battery level) of the battery 189 or the input current.

According to an embodiment, when the external device 302 is the charging device 302 that does not support the PPS function (e.g., when the external device 302 is a second charging device or a third charging device), the processor 120 may charge the battery 189 by using the second charger 320 for at least some period of charging the battery 189, and charge the battery 189 by using the first charger 310 for the rest of the period of charging the battery 189.

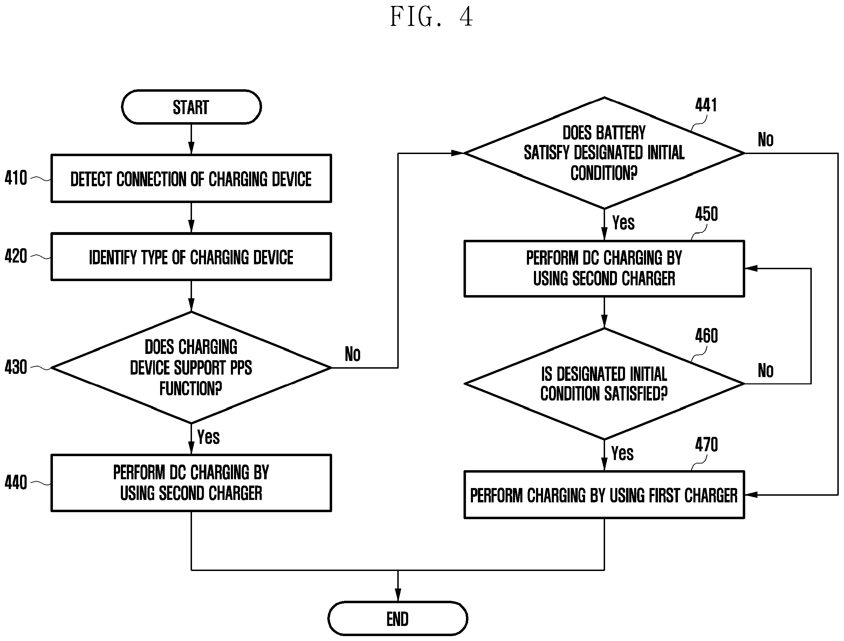

FIG. 4 is a flowchart illustrating an operation of charging a battery 189 by an electronic device 301 according to an embodiment.

At least some of the operations illustrated in FIG. 4 may be omitted. Before or after at least some operations illustrated in FIG. 4, at least some operations mentioned with reference to other drawings in the disclosure may be additionally inserted.

The operations illustrated in FIG. 4 may be performed by a processor (e.g., the processor of FIG. 1). For example, the memory of the electronic device 301 (e.g., the memory 130 of FIG. 1) may store instructions that, when executed, allow the processor to perform at least some operations illustrated in FIG. 4.

Hereinafter, an operation in which the electronic device 301 charges the battery 189 according to an embodiment will be described with reference to FIG. 4.

In operation 410, the electronic device 301 according to an embodiment may detect the connection of the charging device 302. For example, the electronic device 301 may detect whether the charging device 302 is connected through a wired connection.

In operation 420, when detecting the connection of the charging device 302, the electronic device 301 according to an embodiment may identify the type of the charging device 302. For example, the electronic device 301 may perform a type C detection operation to identify the Rp value of the charging device 302 through the USB communication module 322. The electronic device 301 may identify whether the charging device 302 is a first charging device that supports the PPS function or a charging device (e.g., a second charging device or a third charging device) 302 that does not support the PPS function based on the type C detection operation. In an embodiment, the electronic device 301 may identify that the charging device 302 is a second charging device (e.g., an AFC charging device) with a fixed output voltage and a fixed output current based on data line communication with the charging device 302 through the MUIC (e.g., MUX IC) 323.

In operation 430, the electronic device 301 according to an embodiment may determine whether the type of the charging device 302 connected by wire supports the PPS function. For example, the electronic device 301 may determine whether the charging device 302 is a first charging device supporting the PPS function.

According to an embodiment, when the charging device 302 is a first charging device supporting the PPS function (e.g., the result of operation 430 is "Yes"), the electronic device 301 may perform operation 440.

According to an embodiment, when the charging device 302 a charging device 302 (e.g., a second charging device or a third charging device) that does not support the PPS function (e.g., the result of operation 430 is "No"), the electronic device 301 may perform operation 441.

In operation 440, when the charging device 302 is a first charging device 302 supporting the PPS function (e.g., the result of operation 430 is "Yes"), the electronic device 301 according to an embodiment may determine an input current and an input voltage based on a battery voltage. The processor may transmit the determined input current and input voltage to the second charger 320 through a designated system interface (e.g., an inter-integrated circuit (I2C). According to an embodiment, the second charger 320 may perform PPS communication with the first charging device through the USB communication module 322, and receive power corresponding to the determined input current and input voltage from the first charging device. When the battery voltage increases as the power is received from the first charging device, the processor may charge the battery 189 while adjusting the input current and the input voltage by using the PPS function of the charging device 302.

According to an embodiment, the processor may charge the battery 189 in a constant current (CC) mode or charge the battery 189 in a constant voltage (CV) mode according to the battery voltage. The processor may control the current supplied to the battery 189 in the CC mode to maintain a preconfigured value. The processor may control the voltage for charging the battery 189 in the CV mode to maintain a preconfigured value.

In operation 441, when the charging device 302 is a charging device 302 (e.g., a second charging device or a third charging device) that does not support the PPS function (e.g., the result of operation 430 is "No"), the electronic device 301 according to an embodiment may determine whether the battery 189 satisfies a designated initial condition. For example, the designated initial condition may include a condition in which the remaining amount (e.g., battery level) of the battery 189 is less than a designated percentage value, and/or a condition in which the battery voltage is less than the designated voltage. According to an embodiment, when the remaining amount of the battery 189 is less than a designated percentage value (e.g., about 5%), and/or when the battery voltage is less than a designated voltage (e.g., about 3.6V), the electronic device 301 may determine that the battery 189 satisfies the designated initial condition. For example, when the remaining amount of the battery 189 is less than 5%, the electronic device 301 may determine that the designated initial condition is satisfied. For example, when the battery voltage is less than 3.6 V, the electronic device 301 may determine that the designated initial condition is satisfied.

According to an embodiment, when the battery 189 satisfies the designated initial condition (e.g., the result of operation 441 is "Yes"), the electronic device 301 may perform operation 450.

According to an embodiment, when the battery 189 does not satisfy the designated initial condition (e.g., the result of operation 441 is "No"), the electronic device 301 may perform operation 470.

In operation 450, according to an embodiment, the electronic device 301 according to an embodiment may connect the second charger 320 and the charging device 302 and charge the battery 189 when the battery 189 satisfies the designated initial condition (e.g., the result of operation 441 is "Yes"), and charge the battery 189 by using the second charger 320 with a direct charging ("DC charging") method.

In operation 460, the electronic device 301 according to an embodiment may monitor whether the designated condition is satisfied while performing DC charging through the charging device 302 (e.g., a second charging device or a third charging device) that does not support the PPS function. For example, the designated condition may include a state in which DC charging is no longer possible with the charging device 302 that does not support the PPS function, i.e., a charging device 302 (e.g., a second charging device or a third charging device) that provides a fixed output voltage and a fixed output current, or an abnormal state in which problems such as ignition are likely to occur. A detailed description of the designated condition will be described later in conjunction with Tables 1 and 3 included in the disclosure.

According to an embodiment, while performing DC charging through the charging device 302 (e.g., a second charging device or a third charging device) that does not support the PPS function, the electronic device 301 may perform operation 470 when the designated condition is satisfied (e.g., the result of operation 460 is "Yes").

According to an embodiment, while performing DC charging through the charging device 302 (e.g., a second charging device or a third charging device) that does not support the PPS function, the electronic device 301 may maintain operation 450 when the designated condition is not satisfied (e.g., the result of operation 460 is "No").

In operation 470, the electronic device 301 according to an embodiment may connect the first charger 310 and the charging device 302 and charge the battery 189 by using the first charger 310. The first charger 310 may include a switching charger (or a switching regulator), and charge the battery 189 by adjusting the input voltage input from the external device 302 or the input current input from the external device 302.

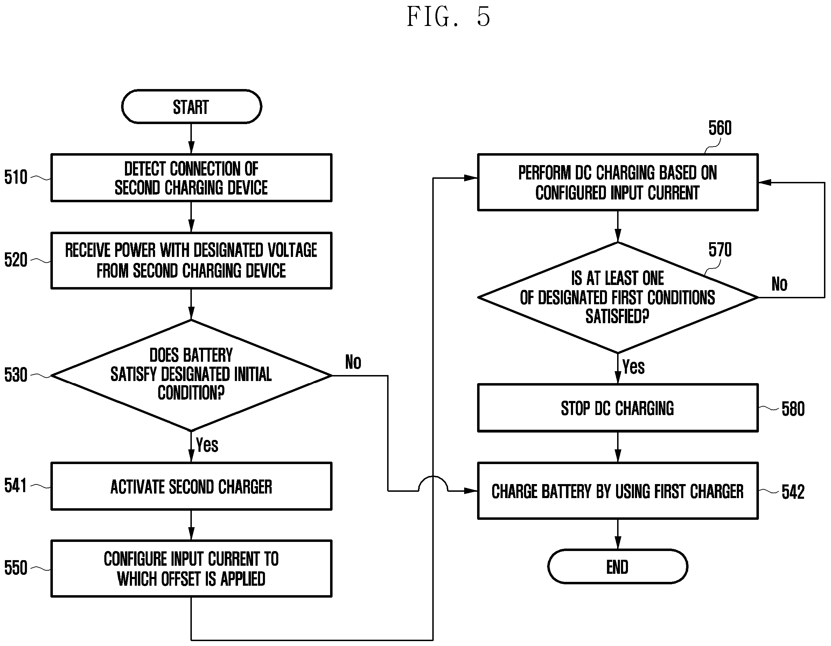

FIG. 5 is a flowchart illustrating an operation of an electronic device 301 according to an embodiment when a second charging device is connected.

At least some of the operations illustrated in FIG. 5 may be omitted. Before or after at least some operations illustrated in FIG. 5, at least some operations mentioned with reference to other drawings in the disclosure may be additionally inserted.

The operations illustrated in FIG. 5 may be performed by a processor (e.g., the processor of FIG. 1). For example, the memory of the electronic device 301 (e.g., the memory 130 of FIG. 1) may store instructions that, when executed, allow the processor to perform at least some operations illustrated in FIG. 5.

Hereinafter, an operation of the electronic device 301 according to an embodiment when a second charging device is connected will be described with reference to FIG. 5.

In operation 510, the electronic device 301 according to an embodiment may detect the connection of the second charging device (e.g., an AFC charging device). For example, when a Vbus voltage of about 5V is input through the terminal, the electronic device 301 may determine that the second charging device 302 (e.g., an AFC charging device) with a fixed output voltage and a fixed output current is connected based on data line communication with the charging device 302 through the MUIC (e.g., a MUX IC) 323. The electronic device 301 according to an embodiment may identify the Rp value of the charging device 302 through the USB communication module (e.g., a CCPD module) 322, and identify the cable type of the charging device 302.

In operation 520, the electronic device 301 according to an embodiment may receive power with a designated voltage from the charging device 302 after identifying that the charging device 302 is the second charging device. For example, when the second charging device is an AFC charging device, the electronic device 301 may receive power with a voltage of about 9V and a current of about 1.65A from the second charging device.

In operation 530, the electronic device 301 according to an embodiment may determine whether the battery 189 is in a designated initial condition. For example, the designated initial condition may include a condition in which the remaining amount (e.g., battery level) of the battery 189 is less than a designated percentage value, and/or a condition in which the battery voltage is less than the designated voltage. According to an embodiment, when the remaining amount of the battery 189 is less than a designated percentage value (e.g., about 5%), and/or when the battery voltage is less than a designated voltage (e.g., about 3.6V), the electronic device 301 may determine that the battery 189 satisfies the designated initial condition. For example, when the remaining amount of the battery 189 is less than 5%, the electronic device 301 may determine that the designated initial condition is satisfied. For example, when the battery voltage is less than 3.6 V, the electronic device 301 may determine that the designated initial condition is satisfied. Operation 530 may be similar to operation 441 of FIG. 4.

According to an embodiment, when the battery 189 satisfies the designated initial condition (e.g., the result of operation 530 is "Yes"), the electronic device 301 may perform operation 541.

According to an embodiment, when the battery 189 does not satisfy the designated initial condition (e.g., the result of operation 530 is "No"), the electronic device 301 may perform operation 542.

In operation 541, the electronic device 301 according to an embodiment may activate the second charger 320 and deactivate the first charger 310. For example, the electronic device 301 may control the second charging device to be connected to the second charger 320 and block the connection between the second charging device and the first charger 310.

In operations 550 and 560, the electronic device 301 according to an embodiment may configure an input current to which an offset is applied and charge the battery 189 with DC based on the configured input current. According to an embodiment, the processor may configure the input current by applying the offset to the maximum output current that the second charging device may provide. The processor may transmit information on the input current to which the offset is applied to the maximum output current to the second charger 320, and the second charger 320 may request the input current to which the offset is applied from the second charging device.

According to an embodiment, as an input current having a value exceeding the maximum output current is requested from the second charger 320, the second charging device may be in a "maximum current output state" that provides the electronic device 301 with the maximum output current that the second charger may provide. The maximum current output state in which the second charging device provides the maximum output current to the electronic device 301 is similar to the "current limit mode" of the charging device 302 supporting the PD protocol, so the maximum current output state of the second charging device may be referred to as "current limit mode".

According to an embodiment, the offset may be configured in consideration of the manufacturing deviation of the second charging device or a margin for each type so that the second charging device may operate in the "current limit mode". For example, considering the manufacturing deviation of the second charging device, or the margin by type, it may be assumed that the maximum output current of the second charging device ranges from about 1.5 A to about 1.8 A. The electronic device 301 may configure an offset so that the second charging device may operate in the current limit mode regardless of the manufacturing deviation of the second charging device and/or the margin for each type. For example, the offset may be configured to about 0.3 A, and the input current to which the offset is applied may be about 1.95 A, assuming that the maximum output current of a particular second charging device is about 1.65 A. In this case, the processor may transmit information on about 1.95A to the second charger 320, and the second charger 320 may request about 1.95A input current from the second charging device. The second charger 320 having the maximum output current configured to about 1.65A may operate in the "current limit mode" in response to receiving a request for the input current of about 1.95A, and may supply the maximum output current of about 1.65A to the electronic device 301. The second charger 320 of the electronic device 301 may charge the battery 189 with DC based on the maximum output current of about 1.65 A from the second charging device. In the disclosure, the offset value of about 0.3A is only an example, and may be variously changed without being limited thereto.

In operation 570, the electronic device 301 according to an embodiment may monitor whether at least one of a plurality of designated first conditions is satisfied while performing DC charging by using the second charging device. For example, the plurality of first conditions may include a state in which DC charging is no longer possible with the charging device 302 that does not support the PPS function, i.e., a second charging device that provides a fixed output voltage and a fixed output current, or an abnormal state in which problems such as ignition are likely to occur. According to an embodiment, the plurality of first conditions may be as illustrated in Table 1. According to an embodiment, the electronic device 301 may perform operation 580 when at least one first condition included in Table 1 is satisfied.

**[Table 1]**

| | |
|---|---|
| input current regulation loop | overcurrent is input from second charging device |
| battery voltage regulation loop | overvoltage state where battery voltage is higher than full charge voltage |
| switched from CC mode to CV mode | charging state is switched from CC mode to CV mode |

Referring to Table 1, the plurality of first conditions may include a case where an input current regulation loop occurs, a case where a battery voltage regulation loop occurs, or the charging state is switched from a CC mode to a CV mode. According to an embodiment, the plurality of first conditions may include a state in which an input current regulation loop occurs. The input current regulation loop may be a state in which overcurrent is input from the second charging device. For example, assuming that the second charger 320 requests an input current of about 1.95A with an offset applied from the second charging device, a current greater than the input current may be input from the second charging device. According to an embodiment, when a current greater than the input current is input from the second charging device, the electronic device 301 may determine that an abnormal state occurs in which overcurrent has occurred from the second charging device. The overcurrent may be caused by aging or burnout of the second charging device. According to an example, to prevent problems such as ignition, when a current greater than the input current is input from the second charging device while performing DC charging by using the second charging device, the electronic device 301 may determine that the first condition for stopping DC charging by using the second charging device is satisfied, and perform operation 580.

According to an embodiment, the plurality of first conditions may include a state in which a battery voltage regulation loop occurs. The battery voltage regulation loop may be in an overvoltage state while DC charging the battery 189 by using the second charging device. For example, assuming that the full charge voltage of the battery 189 is configured to about 4.4V, if the battery voltage is detected to be about 4.6V which is greater than the full charge voltage, the battery voltage regulation loop may occur and be determined to be in an abnormal state. According to an embodiment, when the battery voltage regulation loop occurs, the electronic device 301 may determine that the first condition for stopping DC charging by using the second charging device is satisfied and perform operation 580.

According to an embodiment, the plurality of first conditions may include a state in which the charging state of the second charging device is switched from a CC mode to a CV mode. According to an embodiment, when the charging state is switched from the CC mode to the CV mode, the processor may shorten the period of the polling signal transmitted to the second charger 320 to identify the input current. For example, while the charging state is in the CC mode, the processor may configure the output period of the polling signal to about 10 seconds, and when the charging state is switched from the CC mode to the CV mode, the polling output period may be configured to less than about 10 seconds, such as 5 seconds.

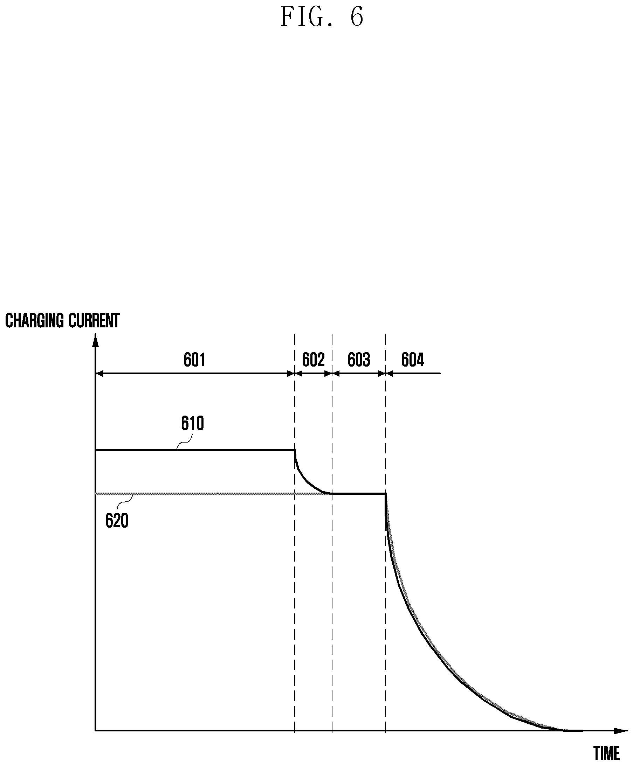

According to an embodiment, when the charging state is switched from the CC mode to the CV mode, the processor 120 may, for example, maintain DC charging for a designated time (e.g., period 602 of FIG. 6) from the time when the polling output period is changed from about 10 seconds to about 5 seconds, and identify that the input current satisfies a state in which the input current is less than a preconfigured value while the DC charging is maintained. The state in which the input current is less than the preconfigured value may include a state in which the input current is smaller than a current value lowered by the designated multiplier (e.g., 1/2, 1/3, and 1/4) to the maximum input current that may be supplied from the first charger 310 to the battery 189.

According to an example, the processor may compare the current value (e.g., a current value lowered by a designated multiplier) which is the maximum input current capable of being supplied to the battery 189 from the first charger 310 (e.g., a switching charger) multiplied by a designated multiplier (e.g., 1/2, 1/3, and 1/4) and the input current input from the second charging device. According to an example, the designated multiplier may be a value corresponding to a multiplier for increasing the input current in the second charger 320. For example, when the second charger 320 includes a 2:1 voltage divider that lowers the input voltage by 1/2 and doubles the input current, the designated multiplier may be 1/2. In this case, the processor may compare the maximum input current that may be supplied to the battery 189 from the first charger 310 (e.g., a switching charger) multiplied by 1/2 of the designated multiplier and the input current input from the second charging device. For example, assuming that the maximum input current that may be supplied to the battery 189 from the first charger 310 (e.g., a switching charger) is about 3 A, the processor may monitor whether the input current from the second charging device is less than or equal to 1.5 A to which a 1/2 multiplier is applied to about 3A. According to an example, when the input current input from the second charging device is less than or equal to 1.5A to which a 1/2 multiplier is applied to about 3A, the processor may consider that charging of the battery 189 by using the first charger 310 is possible or DC charging is no longer possible, and may perform operation 580.

According to an embodiment, the electronic device 301 may extend the period of charging the battery 189 in the CC mode by maintaining DC charging until the input current input from the second charging device is less than or equal to the maximum input current that may be supplied from the first charger 310 (e.g., a switching charger) to the battery 189 multiplied by a designated multiplier (e.g., 1/2). According to an embodiment, the electronic device 301 may increase the charging speed of the battery 189 by extending the period for charging the battery 189 in the CC mode.

In operation 580, the electronic device 301 according to an embodiment may stop DC charging for charging the battery 189 by using the second charger 320.

In operation 542, the electronic device 301 according to an embodiment may connect the first charger 310 and the second charging device and charge the battery 189 by using the first charger 310. The first charger 310 may include a switching charger (or a switching regulator) and charge the battery 189 by adjusting an input voltage input from the external device 302 or an input current input from the external device 302.

FIG. 6 is a graph comparing a charging profile of an electronic device 310 according to an embodiment and a charging profile according to a comparative example when a second charging device is connected.

In FIG. 6, the graph 610 may represent a charging profile for charging the battery 189 when the electronic device 301 according to an embodiment is connected to the second charging device.

In FIG. 6, the graph 620 may represent a charging profile for charging the battery 189 when the electronic device 301 according to a comparative example is connected to the second charging device. The electronic device 301 according to the comparative example may be an electronic device 301 that charges the battery 189 by using the first charger 310 when a second charging device that does not support the PPS function is connected.

Referring to the graph 610, the charging profile for charging the battery 189 when the electronic device 301 is connected to the second charging device may include a period 601, a period 602, and a period 603 for DC charging of the battery 189 by using the second charger 320, and a period 604 for general charging of the battery 189 by using the switching charger of the first charger 310.

In period 601, as the electronic device 301 according to an embodiment configures the input current to which the offset is applied, the second charging device may operate in a "current limit mode". Accordingly, the second charging device may supply a maximum output current of the second charging device, for example, a current of 1.65 A, to the electronic device 301. According to an embodiment, the electronic device 301 may charge the battery 189 with DC based on the maximum output current of the second charging device, and the charging mode may be the CC mode in which the input current is maintained at a constant value.

In period 602, the electronic device 301 according to an embodiment may detect that the charging state of the second charging device is switched from the CC mode to the CV mode. For example, if the output voltage of the second charging device detected through the Vbus is fixed at about 9V and the input current provided by the second charging device decreases, the electronic device 301 may determine that the charging state of the second charging device is switched from the CC mode to the CV mode. According to an embodiment, when the charging state is switched from the CC mode to the CV mode, the electronic device 301 may shorten the period of the polling signal transmitted to the second charger 320 to identify the input current.

In period 603, the electronic device 301 according to an embodiment may compare the maximum input current that may be supplied to the battery 189 from the first charger 310 (e.g., a switching charger) multiplied by a designated multiplier (e.g., 1/2, 1/3, and 1/4) and the input current input from the second charging device. According to an embodiment, the processor may perform DC charging by using the second charger 320 until the input current input from the second charging device is less than or equal to 1.5A to which a 1/2 multiplier is applied to about 3A. According to an embodiment, in period 603, the charging state may be the CC mode for charging the battery 189 while maintaining a current lower than the maximum output current of the second charging device.

In period 601, period 602, and period 603, the electronic device 301 according to a comparative example may supply an output current configured lower than the maximum output current of the second charging device to the electronic device 301, and the electronic device 301 according to the comparative example may operate in the CC mode.

In period 604, when the input current input from the second charging device is less than or equal to the maximum input current that may be supplied to the battery 189 from the first charger 310 (e.g., a switching charger) multiplied by a designated multiplier (e.g., 1/2), the electronic device 301 according to an embodiment may stop DC charging and charge the battery 189 by using the first charger 310. According to an embodiment, in a period 603, the charging state may be the CV mode in which the output voltage of the second charging device is fixed to a voltage equal to or similar to the full charge voltage of the battery 189, and the output current of the second charging device is lowered.

In period 604, the electronic device 301 according to the comparative example may charge the battery 189 in the CV mode similar to the electronic device 301 according to an embodiment.

Unlike the electronic device 301 according to the comparative example, the electronic device 301 according to an embodiment may increase the charging time period for charging the battery 189 in the CC mode to increase the charging speed of the battery 189, and may perform DC charging for a partial period of time during a period for charging the battery 189 to improve charging efficiency and heat generation performance.

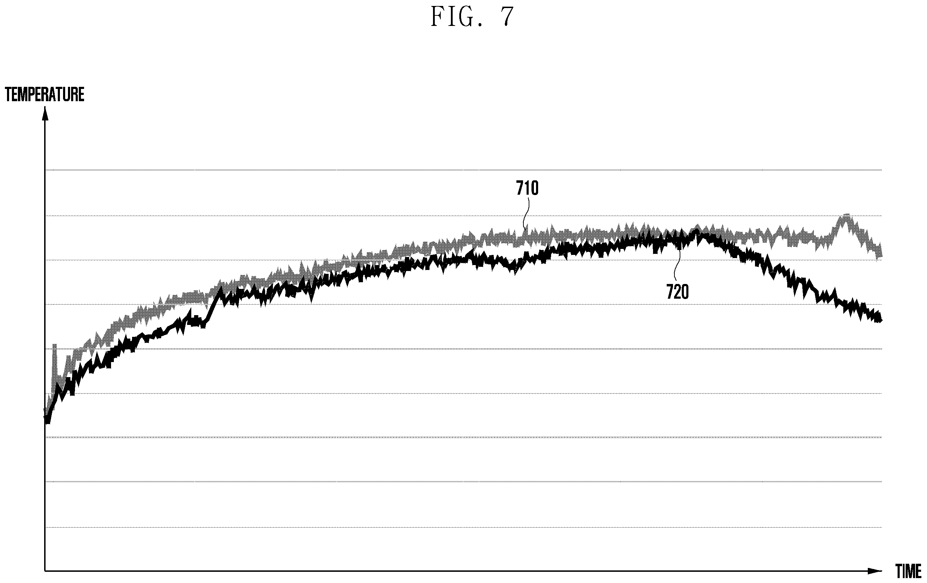

FIG. 7 is a graph comparing heat generation of an electronic device 301 according to an embodiment and heat generation of an electronic device 301 according to a comparative example when a second charging device is connected.

In FIG. 7, the graph 710 is a graph measuring heat generated on the surface of the electronic device 301 when the electronic device 301 according to the comparative example of FIG. 6 charges the battery 189 by using the second charging device.

In FIG. 7, the graph 720 is a graph measuring heat generated on the surface of the electronic device 301 when the electronic device 301 according to an embodiment of FIG. 6 charges the battery 189 by using the second charging device.

Comparing the graph 710 and the graph 720, it may be identified that the electronic device 301 according to an embodiment generates less heat than the electronic device 301 according to the comparative example by performing DC charging for a part of the period during which the battery 189 is charged. For example, the electronic device 301 according to an embodiment performs DC charging for a part of the period during which the battery 189 is charged, so that the surface heating temperature is lowered by about 0.2°C compared to the electronic device 301 according to the comparative example.

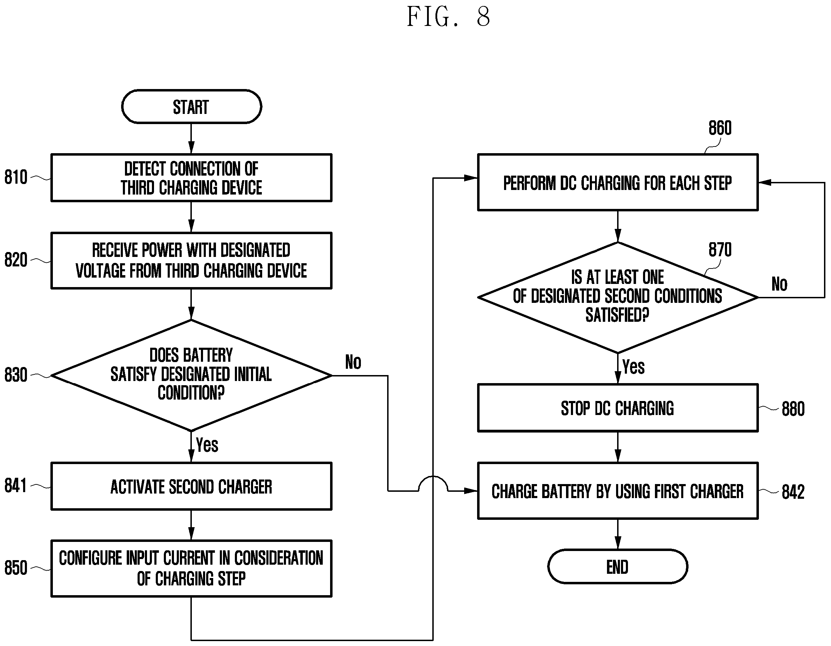

FIG. 8 is a flowchart illustrating operations of an electronic device 301 according to an embodiment when a third charging device is connected.

At least some of the operations illustrated in FIG. 8 may be omitted. Before or after at least some operations illustrated in FIG. 8, at least some operations mentioned with reference to other drawings in the disclosure may be additionally inserted.

The operations illustrated in FIG. 8 may be performed by a processor (e.g., the processor of FIG. 1). For example, the memory of the electronic device 301 (e.g., the memory 130 of FIG. 1) may store instructions that, when executed, allow the processor to perform at least some operations illustrated in FIG. 8.

Hereinafter, an operation of the electronic device 301 according to an embodiment when a third charging device is connected will be described with reference to FIG. 8.

In operation 810, the electronic device 301 according to an embodiment may detect the connection of the third charging device (e.g., a PD 2.0 charging device 302). For example, the electronic device 301 may identify the Rp value of the charging device 302 through the USB communication module (e.g., a CCPD module) 322, and identify the type of charging device 302 and the cable type of the charging device 302.

In operation 810, the electronic device 301 according to an embodiment may perform PD bi-phase marked code (BMC) communication through a USB communication module (e.g., CCPD module) 322, and receive designated power having a voltage boosted from about 5V to about 9V from the third charging device.

In operation 830, the electronic device 301 according to an embodiment may determine whether the battery 189 is in a designated initial condition. For example, the designated initial condition may include a condition in which the remaining amount (e.g., battery level) of the battery 189 is less than a designated percentage value, and/or a condition in which the battery voltage is less than the designated voltage. According to an embodiment, when the remaining amount of the battery 189 is less than a designated percentage value (e.g., about 5%), and/or when the battery voltage is less than a designated voltage (e.g., about 3.6V), the electronic device 301 may determine that the battery 189 satisfies the designated initial condition. For example, when the remaining amount of the battery 189 is less than 5%, the electronic device 301 may determine that the designated initial condition is satisfied. For example, when the battery voltage is less than 3.6 V, the electronic device 301 may determine that the designated initial condition is satisfied. Operation 830 may be similar to operation 441 of FIG. 4 or operation 530 of FIG. 5.

According to an embodiment, when the battery 189 satisfies the designated initial condition (e.g., the result of operation 830 is "Yes"), the electronic device 301 may perform operation 841.

According to an embodiment, when the battery 189 does not satisfy the designated initial condition (e.g., the result of operation 830 is "No"), the electronic device 301 may perform operation 842.

In operation 841, the electronic device 301 according to an embodiment may activate the second charger 320 and deactivate the first charger 310. For example, the electronic device 301 may control the second charging device to be connected to the second charger 320 and block the connection between the second charging device and the first charger 310. Operation 841 may be similar to operation 541 of FIG. 5.

In operation 850, the electronic device 301 according to an embodiment may configure the input current in consideration of the charging step. According to an embodiment, the third charging device, unlike the second charging device, may be a charging device 302 that provides power greater than or equal to a designated reference power (e.g., about 20W). For example, the third charging device may provide an output of either about 20W, or one of about 27W, about 45W, and/or about 100W which are greater than about 20W. Unlike the second charger, the third charging device has a relatively high output power. Accordingly, when detecting that the third charging device is connected, the electronic device 301 according to an embodiment may configure the input current by dividing it into a plurality of charging steps. According to an embodiment, the input current of each of the plurality of charging steps may be determined based on a preconfigured input current value for each step to control the charging device 302 (e.g., the first charger) supporting the PPS function. For example, the processor may include a battery 189 driver (not illustrated) to charge the battery 189, and the battery 189 driver may store step-by-step input current values for step-by-step DC charging by using the PPS function. According to an embodiment, the processor may identify the maximum driving current of the third charging device in operation 810 of performing PD bi-phase marked code (BMC) communication through the USB communication module (e.g., a CCPD module) 322. According to an embodiment, the electronic device 301 may compare the step-by-step input current value for step-by-step DC charging by using the PPS function with the maximum driving current of the third charging device, and configure the input current based on the comparison result.

According to an embodiment, the electronic device 301 may apply an operation of multiplying the input current value mapped to each step by a designated multiplier (e.g., 2) in order for the input current value of each step preconfigured to use the PPS function to be greater than the maximum driving current of the third charging device.

**Table 2]**

| | first step | second step | first step (e.g., last step) |
|---|---|---|---|
| input current configured | 2A | 1.5A | 1A |
| to correspond to each step | | | |
| input current converted by multiplying the designated multiplier (e.g., 2) | 4A | 3A | 2A |
| Output current of third charging device | 2.75A | 2.75A | 2A |

Referring to the second column of Table 2, the input current value preconfigured to correspond to the first step may be about 2A. The electronic device 301 may configure a converted input current of about 4A by multiplying about 2A by a designated multiplier of 2. For example, the third charging device may be a PD 2.0 charging device 302 that provides a fixed value of 9V/2.75A, and may operate in the "current limit mode" as requested for the converted input current of about 4A. Accordingly, the third charging device may supply the maximum driving current of 2.75A to the electronic device 301. The electronic device 301 may perform DC charging based on the maximum input driving current of 2.75A. Referring to the third column of Table 2, the input current value preconfigured to correspond to the second step may be about 1.5A. The electronic device 301 may configure a converted input current of about 3A by multiplying about 1.5A by a designated multiplier of 2. For example, the third charging device may be a PD 2.0 charging device 302 that provides a fixed value of 9V/2.75A, and may operate in the "current limit mode" as requested for the converted input current of about 3A. Accordingly, the third charging device may supply the maximum driving current of 2.75A to the electronic device 301. The electronic device 301 may perform DC charging based on the maximum input driving current of 2.75A.

Referring to the fourth column of Table 2, the input current value preconfigured to correspond to the third step may be about 1A. The electronic device 301 may configure a converted input current of about 2A by multiplying about 1A by a designated multiplier of 2. For example, the third charging device may be a PD 2.0 charging device 302 that provides a fixed value of 9V/2.75A, and may provide 2A to the electronic device 301 as requested for the converted input current of about 2A. The electronic device 301 may perform DC charging based on the 2A input.

In operation 860, the electronic device 301 according to an embodiment may perform DC charging for each configured step. According to an embodiment, in operation 850, the electronic device 301 may request the input current determined by the processor from the third charging device and perform DC charging based on the power received from the third charging device.

In operation 870, the electronic device 301 according to an embodiment may monitor whether at least one of a plurality of designated second conditions is satisfied while performing step-by-step DC charging by using a third charging device. For example, the plurality of second conditions may include a state in which DC charging is no longer possible with the charging device 302 that does not support the PPS function, i.e., a third charging device that provides a fixed output voltage and a fixed output current, or an abnormal state in which problems such as ignition are likely to occur. According to an embodiment, the plurality of second conditions may be as illustrated in Table 3. According to an embodiment, the electronic device 301 may perform operation 880 when at least one second condition included in Table 3 is satisfied.

**Table 3]**

| | |
|---|---|
| input current regulation loop | overcurrent is input from third charging device |
| battery voltage regulation loop occurs at last step | overvoltage state where battery voltage is higher than full charge voltage at last step |
| switched from CC mode to CV mode | charging state is switched from CC mode to CV mode |

Referring to Table 3, the plurality of second conditions may include a case where an input current regulation loop occurs, a case where a battery voltage regulation loop occurs at the last step, or the charging state is switched from a CC mode to a CV mode. According to an embodiment, the plurality of second conditions may include a state in which an input current regulation loop occurs. The input current regulation loop may be a state in which overcurrent is input from the third charging device. For example, assuming that the second charger 320 requests an input current of about 2.75A to the third charging device, a current greater than the input current may be input from the third charging device. According to an embodiment, when a current greater than the input current is input from the third charging device, the electronic device 301 may determine that an abnormal state occurs in which overcurrent has occurred from the third charging device. The overcurrent may be caused by aging or burnout of the third charging device. According to an example, to prevent problems such as ignition, when a current greater than the input current is input from the third charging device while performing DC charging by using the third charging device, the electronic device 301 may determine that the second condition for stopping DC charging by using the third charging device is satisfied, and perform operation 880.

According to an embodiment, the plurality of second conditions may include a state in which a battery voltage regulation loop occurs at the last step. The battery voltage regulation loop may be in an overvoltage state while DC charging the battery 189 step by step by using the third charging device. For example, the reference voltage of the battery 189 preconfigured to correspond to the last step may be configured as the full charge voltage of the battery 189 (e.g., about 4.4V). According to an embodiment, when the battery voltage is detected to be about 4.6V, which is greater than the reference voltage (e.g., full charge voltage) of the battery 189 preconfigured to correspond to the last step, the electronic device 301 may determine that a battery voltage regulation loop has occurred and is in an abnormal state. According to an embodiment, based on that the battery voltage regulation loop occurs at the last step, the electronic device 301 may determine that the second condition for stopping DC charging by using the third charging device is satisfied and perform operation 880.

According to an embodiment, when a battery voltage regulation loop occurs in a specific step other than the last step, the electronic device 301 may change the charging step by changing the first input current corresponding to the current step to the second input current corresponding to the next step. For example, the electronic device 301 may configure a step for charging the battery 189 by dividing the step into a first step, a second step, and a third step. According to an embodiment, the electronic device 301 may monitor whether the battery voltage exceeds the reference voltage (e.g., about 4. 1V) of the first battery 189 corresponding to the first step section during DC charging in the first step section. The electronic device 301 may determine that the battery voltage regulation loop has occurred when the battery voltage exceeds the reference voltage (e.g., about 4.1 V) of the first battery 189 corresponding to the first step section. When the battery voltage regulation loop occurs in the first step section, the electronic device 301 may start the second step by changing the first input current (e.g., about 5.5 A) corresponding to the first step section to the second input current (e.g., about 4 A) corresponding to the second step section. According to an embodiment, the electronic device 301 may monitor whether the battery voltage exceeds the reference voltage (e.g., about 4.25V) of the second battery 189 corresponding to the second step section while DC charging in the second step section. The electronic device 301 may determine that the battery voltage regulation loop has occurred when the battery voltage exceeds the reference voltage (e.g., about 4.25V) of the second battery 189 corresponding to the second step section. When the battery voltage regulation loop occurs in the second step section, the electronic device 301 may start the third step by changing the second input current (e.g., about 4 A) corresponding to the second step section to a third input current (e.g., about 3.5 A) corresponding to the third step section.

In the disclosure, dividing the step in which the electronic device 301 charges the battery 189 into a first step, a second step, and a third step is not limited, and may be variously changed. For example, the electronic device 301 may charge the battery 189 by dividing the steps into two or more than two steps.

According to an embodiment, the plurality of second conditions may include a state in which the charging state of the third charging device is switched from a CC mode to a CV mode. According to an embodiment, when the charging state is switched from the CC mode to the CV mode, the processor may shorten the period of the polling signal transmitted to the second charger 320 to identify the input current. For example, while the charging state is in the CC mode, the processor may configure the output period of the polling signal to about 10 seconds, and when the charging state is switched from the CC mode to the CV mode, the polling output period may be configured to less than about 10 seconds, such as 5 seconds.

According to an example, the processor may compare the maximum input current that may be supplied to the battery 189 from the first charger 310 (e.g., a switching charger) multiplied by a designated multiplier (e.g., 1/2, 1/3, and 1/4) and the input current input from the third charging device. According to an example, the designated multiplier may be a value corresponding to a multiplier for increasing the input current in the second charger 320. For example, when the second charger 320 includes a 2:1 voltage divider that lowers the input voltage by 1/2 and doubles the input current, the designated multiplier may be 1/2. In this case, the processor may compare the maximum input current that may be supplied to the battery 189 from the first charger 310 (e.g., a switching charger) multiplied by 1/2 of the designated multiplier and the input current input from the third charging device. For example, assuming that the maximum input current that may be supplied to the battery 189 from the first charger 310 (e.g., a switching charger) is about 3 A, the processor may monitor whether the input current from the third charging device is less than or equal to 1.5 A to which a 1/2 multiplier is applied to about 3A. According to an example, when the input current input from the third charging device is less than or equal to 1.5A to which a 1/2 multiplier is applied to about 3A, the processor may consider that charging of the battery 189 by using the first charger 310 is possible or DC charging is no longer possible, and may perform operation 880.

According to an embodiment, when any one of the plurality of second conditions is not satisfied (e.g., the result of operation 870 is "No"), the electronic device 301 may perform operation 860 again.

According to an embodiment, the electronic device 301 may extend the period of charging the battery 189 in the CC mode by maintaining DC charging until the input current input from the third charging device is less than or equal to the maximum input current that may be supplied from the first charger 310 (e.g., a switching charger) to the battery 189 multiplied by a designated multiplier (e.g., 1/2). According to an embodiment, the electronic device 301 may increase the charging speed of the battery 189 by extending the period for charging the battery 189 in the CC mode.

In operation 880, the electronic device 301 according to an embodiment may stop DC charging for charging the battery 189 by using the second charger 320.

In operation 842, the electronic device 301 according to an embodiment may connect the first charger 310 and the second charging device and charge the battery 189 by using the first charger 310. The first charger 310 may include a switching charger (or a switching regulator) and charge the battery 189 by adjusting an input voltage input from the external device 302 or an input current input from the external device 302.

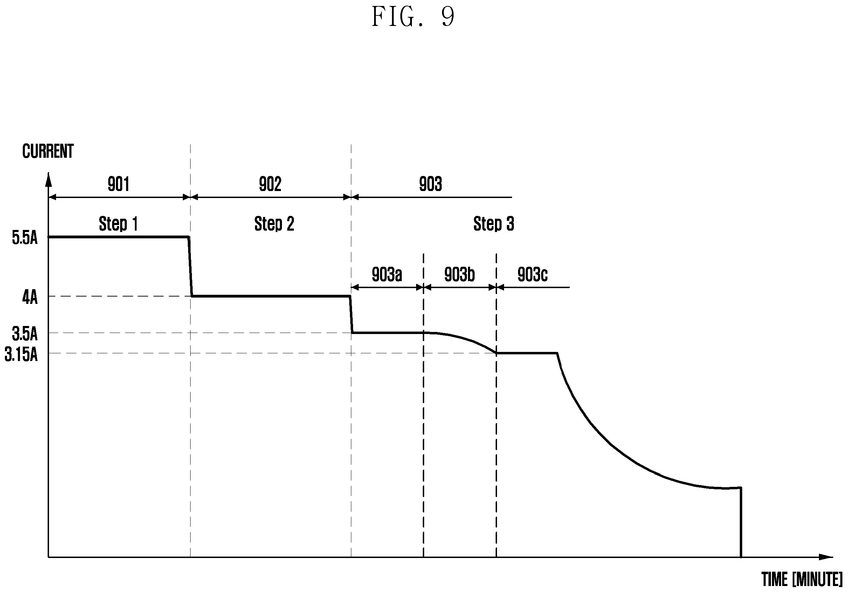

FIG. 9 is a graph illustrating a charging profile of an electronic device 301 according to an embodiment when a third charging device is connected.

Referring to FIG. 9, the charging profile for charging the battery 189 when the electronic device 301 according to an embodiment is connected to the third charging device may be divided into a plurality of charging steps. For example, the electronic device 301 may configure the steps for charging the battery 189 by dividing them into a first step, a second step, and a third step. 901 of FIG. 9 may indicate a charging profile according to the first step. 902 of FIG. 9 may indicate a charging profile according to the second step. 903 of FIG. 9 may indicate a charging profile according to the third step, which is the last step.

In the first step, the electronic device 301 according to an embodiment may charge the battery 189 with DC based on the maximum output current of the third charging device, and in this case, the charging mode may be a CC mode in which the input current is maintained at a constant value. For example, the maximum driving current of the third charging device may be about 5.5 A.

When a battery voltage regulation loop occurs during DC charging in the first step, the electronic device 301 according to an embodiment may change the input current requested from the third charging device to a second input current (e.g., about 4A) that is lower than the maximum output current. When the input current is changed to the second input current, DC charging according to the second step may start.

In the second step, the electronic device 301 according to an embodiment may receive designated power corresponding to the second input current from the third charging device, and charge the battery 189 with DC based on the designated power. In this case, the charging mode may be a CC mode in which the input current is maintained at a constant value.

When the battery voltage regulation loop occurs during DC charging in the second step, the electronic device 301 according to an embodiment may change the input current requested from the third charging device to a third input current (e.g., about 3.5A) that is lower than the second input current. When the input current is changed to the third input current, DC charging according to the third step may start.

In the third step, the electronic device 301 according to an embodiment may receive designated power corresponding to the third input current from the third charging device, and charge the battery 189 with DC based on the designated power. According to an embodiment, the third step may include a first sub-section 903a operating in a CC mode in which an input current is maintained at a constant value, a second sub-section 903b in which the input current from the second charging device is charged with DC until the input current is equal to or less than the maximum input current that may be supplied from the first charger 310 (e.g., a switching charger) to the battery 189 multiplied by a designated multiplier (e.g., 1/2), and operates in the CV mode, and a third sub-section 903c in which the DC charging is stopped and the battery 189 is charged by using the first charger 310 based on that the input current from the second charging device is equal to or less than the maximum input current that may be supplied from the first charger 310 (e.g., a switching charger) to the battery 189 multiplied by a designated multiplier (e.g., 1/2).

Unlike the electronic device 301 according to the comparative example, the electronic device 301 according to an embodiment may increase the charging time period for charging the battery 189 in the CC mode to increase the charging speed of the battery 189, and may perform DC charging for a partial period of time during a period for charging the battery 189 to improve charging efficiency and heat generation performance.

## Claims

1. An electronic device comprising:
a battery;
a first charger comprising a switching regulator;
a second charger comprising a power converter which outputs an input current supplied from an external device by increasing the input current by a designated multiplier, and which outputs an input voltage supplied from the external device by lowering the input voltage by the designated multiplier; and
a processor, wherein the processor is configured to:
identify the type of the external device based on detecting that the external device is connected in a wired manner;
determine whether the external device is a first charging device capable of adjusting an output voltage and an output current based on the controlling of the processor;
charge the battery by using the second charger, in case that the external device is the first charging device, and identify whether the remaining amount or voltage of the battery is less than a designated value as a designated initial condition of the battery, in case that the external device is not the first charging device but a second charging device with a fixed output voltage and output current;
charge the battery by using the first charger, in case that the battery does not satisfy a designated initial condition;
charge the battery by using the second charger, in case that the battery satisfies a designated initial condition;
monitor whether a plurality of first conditions designated while charging the battery through the second charger satisfy a state in which a current greater than the input current is input from the second charging device, a state in which a battery voltage of the battery is detected to be higher than the designated full charge voltage, or a state in which the input current is less than a preconfigured value; and
deactivate the second charger and charge the battery by using the first charger, in case that at least one of the plurality of designated first conditions is satisfied.

2. The electronic device of claim 1, wherein the state in which the input current is less than a preconfigured value comprises a state in which the input current is smaller than the current value lowered by the designated multiplier to the maximum input current capable of being supplied from the first charger to the battery.

3. The electronic device of claim 1, wherein the second charging device is a charging device that does not support power delivery (PD) communication and provides an output less than a designated reference power.

4. The electronic device of claim 3, wherein the second charging device is a charging device that does not support a programmable power supply (PPS) function.

5. The electronic device of claim 3, wherein the processor is configured to, in case that the external device connected to the electronic device is the second charging device and satisfies the designated initial condition:
configure an input current obtained by applying an offset to the maximum output current capable of being provided from the second charging device;
receive the maximum output current from the second charging device by requesting the input current to which the offset is applied from the second charging device; and
charge the battery by controlling the maximum output current to be input from the second charging device to the second charger.

6. The electronic device of claim 1, wherein the processor is configured to, in case that the external device is not the first charging device but a third charging device in which output voltage and output current are fixed:
identify whether the battery satisfies a designated initial condition;
charge the battery by using the first charger, in case that the battery does not satisfy a designated initial condition;
charge the battery by using the second charger, in case that the battery satisfies a designated initial condition;
monitor whether at least one of a plurality of designated second conditions is satisfied while charging the battery through the second charger; and
deactivate the second charger and charge the battery by using the first charger, in case that at least one of the plurality of designated second conditions is satisfied.

7. The electronic device of claim 6, wherein the third charging device is a charging device that supports power delivery (PD) communication and provides an output greater than or equal to a designated reference power.

8. The electronic device of claim 6, wherein the plurality of designated second conditions comprise;
a state in which a current greater than the input current is input from the third charging device;
a state in which a battery voltage of the battery is detected to be higher than a designated full charge voltage in the last step section among a plurality of charging steps for charging the battery; or
a state in which a constant current (CC) mode where the output current of the third charging device is fixed is switched to a constant voltage (CV) mode where the output voltage of the third charging device is fixed.

9. The electronic device of claim 8, wherein the processor is configured to shorten the output period of a polling signal for identifying the current input to the second charger in case that the third charging device switches from the CC mode to the CV mode.

10. The electronic device of claim 9, wherein the processor is configured to:
compare a value obtained by applying a designated multiplier to the maximum input current supplied to the battery from the first charger and an input current input from the third charging device in case that the third charging device switches from the CC mode to the CV mode; and
deactivate the second charger and charge the battery by using the first charger, in case that the input current input from the third charging device is smaller than or equal to the value obtained by applying the designated multiplier to the maximum input current.

11. A method of an electronic device, the electronic device comprising a battery, a first charger comprising a switching regulator, and a second charger comprising a power converter which lowers an input current supplied from an external device by a designated multiplier, and which increases an input voltage supplied from the external device by the designated multiplier, the method comprising:
identifying the type of the external device based on detecting that the external device is connected in a wired manner;
determining whether the external device is a first charging device capable of adjusting an output voltage and an output current based on the controlling of the electronic device;
charging the battery by using the second charger, in case that the external device is the first charging device, and identifying whether the remaining amount or voltage of the battery is less than a designated value as a designated initial condition of the battery, in case that the external device is not the first charging device but a second charging device with a fixed output voltage and output current;
charging the battery by using the first charger, in case that the battery does not satisfy a designated initial condition;
charging the battery by using the second charger, in case that the battery satisfies a designated initial condition;
monitoring whether a plurality of first conditions designated while charging the battery through the second charger satisfy a state in which a current greater than the input current is input from the second charging device, a state in which a battery voltage of the battery is detected to be higher than the designated full charge voltage, or a state in which the input current is less than a preconfigured value; and
deactivating the second charger and charging the battery by using the first charger, in case that at least one of the plurality of designated first conditions is satisfied.

12. The method of claim 11, wherein the state in which the input current is less than a preconfigured value comprises a state in which the input current is smaller than the current value lowered by the designated multiplier to the maximum input current capable of being supplied from the first charger to the battery.

13. The method of claim 11, wherein the second charging device is a charging device that does not support power delivery (PD) communication and provides an output less than a designated reference power.

14. The method of claim 13, wherein the second charging device is a charging device that does not support a programmable power supply (PPS) function.

15. The method of claim 13, the method further comprising, in case that the external device connected to the electronic device is the second charging device and satisfies the designated initial condition:
configuring an input current obtained by applying an offset to the maximum output current capable of being provided from the second charging device;
receiving the maximum output current from the second charging device by requesting the input current to which the offset is applied from the second charging device; and
charging the battery by controlling the maximum output current to be input from the second charging device to the second charger.
